# EUROPÄISCHE PATENTANMELDUNG

(11) **EP 3 926 002 A1**
(43) Veröffentlichungstag der Anmeldung: **22.12.2021**
(21) Anmeldenummer: 20179990.5
(22) Anmeldetag: 15.06.2020
(51) Int. Cl.: C08K 3/013, C08K 3/016, C08K 3/32, C08K 5/00, C08K 5/098, C08K 5/3492, C08K 5/5313, C08K 5/5317, C08K 7/14, C08K 3/22, C08K 3/38

(54) **FLAMMSCHUTZMITTEL-STABILISATOR-KOMBINATION FÜR THERMOPLASTISCHE POLYMERE**

(71) Anmelder: Clariant International Ltd, 4132 Muttenz (CH)
(72) Erfinder: HÖROLD, Sebastian, 86420 Diedorf (DE); BAUER, Harald, 50170 Kerpen (DE)
(74) Vertreter: Jacobi, Carola

(57) **Zusammenfassung**

Gegenstand der Erfindung ist eine Flammschutzmittel-Stabilisator-Kombination für thermoplastische Polymere, enthaltend als Komponente A 20 bis 99,7 Gew.-% Phosphinsäuresalz der Formel (I) als Komponente A 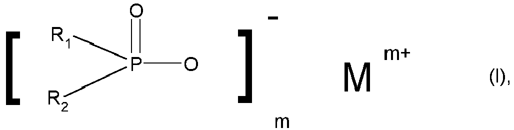 worin
R₁ und R₂
jeweils Ethyl, M AI und
m 3
bedeutet;
als Komponente B 0,2 bis 16 Gew.-% Aluminium-Salze der Ethylbutylphosphinsäure, der Dibutylphosphinsäure, der Ethylhexylphosphinsäure, der Butylhexylphosphinsäure und/oder der Dihexylphosphinsäure;
als Komponente C 0,1 bis 80 Gew.-% eines Salzes der phosphorigen Säure mit der allgemeinen Formel (II)

[HP(=O)O₂]²⁻ M^{m+} (II)

worin
M
Zn und
m
2 bedeutet;
als Komponente D 0 bis 80 Gew.-% eines Salzes der phosphorigen Säure mit der allgemeinen Formel (III)

[HP(=O)O₂]²⁻₃ M^{m+}₂ (III)

worin
M
Al und
m
3 bedeutet;
als Komponente E 0 bis 30 Gew.-% eines stickstoffhaltigen Synergisten und/oder eines Phosphor- und/oder Stickstoff-haltigen Flammschutzmittels;
als Komponente F 0 bis 10 Gew.-% eines anorganischen Synergisten, ausgewählt aus Zinkborat, Zinkstannat, Böhmit und/oder Hydrotalcit;
als Komponente G 0 bis 3 Gew. % eines organisches Phosphonits und/oder einer Mischung aus einem organischem Phosphonit und einem organischen Phosphit und
als Komponente H 0 bis 3 Gew.-% eines Esters und/oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

## Beschreibung

Die Erfindung betrifft eine Flammschutzmittel-Stabilisator-Kombination für halogenfreie thermoplastische Polymere sowie polymere Formmassen und Formkörper, die solche Flammschutzmittel-Stabilisator-Kombinationen enthalten.

Brennbare Kunststoffe müssen in der Regel mit Flammschutzmitteln ausgerüstet werden, um die von den Kunststoffverarbeitern und teilweise vom Gesetzgeber geforderten hohen Flammschutzanforderungen erreichen zu können. Bevorzugtauch aus ökologischen Gründen - werden nicht-halogenierte Flammschutzmittelsysteme eingesetzt, die nur geringe Mengen an oder keine Rauchgase bilden.

Unter diesen Flammschutzmitteln haben sich die Salze von Alkylphosphinsäuren (Phosphinate) als besonders wirksam für thermoplastische Polymere erwiesen (DE-2252258A und DE-2447727A). Doch führen deren Gasphasenaktivität und die im Molekül an das Phosphoratom gebundenen Alkylreste im Regelfall zu verstärkter Rauchbildung.

Aus der US-7420007B2 und der DE-A-102017212096 ist bekannt, dass Dialkylphosphinate, die eine geringe Menge an ausgewählten Telomeren enthalten, als Flammschutzmittel für Polymere geeignet sind. Jedoch erwartet der Fachmann von diesen Telomeren wegen deren Alkylresten eine verstärkte Rauchbildung.

Es ist bekannt, dass Aluminiumdiethylphosphinat und Melaminpolyphosphat und Aluminiumoxide in Epoxidharzen eine geringe Rauchbildung zeigen. Jedoch sind Epoxidharze relativ leicht flammhemmend auszurüsten, es werden wesentlich geringere Flammschutzmengen benötigt als in den hier vorliegenden schwieriger flammzuschützenden Polyamiden und Polyestern. Deswegen ist es besonders überraschend, dass mit der vorliegenden Flammschutzmittel-Stabilisator-Kombination ausgezeichnete Werte bei Polyamiden und Polyestern erreicht werden.

Mischungen von einem Dialkylphosphinsäuresalz und einem Aluminium-Phosphit oder Mischungen von einem Dialkylphosphinsäuresalz und einem Zink-Phosphit und/oder einem Phosphor/Stickstoff Flammschutzmittel (DE-A-20101048025) hatten bisher lediglich zur Aufgabe neben der Flammwidrigkeit die Stabilität von Kunststoffen bei der Verarbeitung in der Schmelze zu verbessern, gute mechanische Werte (bessere Bruchdehnung) zu bewirken und nicht zu Formbelägen oder zum Ausblühen aus den Kunststoffen zu führen.

Systeme aus Aluminiumdiethylphosphinat und Melaminpolyphosphat und Aluminiumhydroxide in Ethylen-Vinylacetat-Copolymeren benötigen sehr hohe Mengen an Flammschutzmittel die sich negativ auf die Stabilität der Polymere auswirkt.

Während die Verwendung von Flammschutzmitteln in Polymerharzen die Entflammbarkeit erheblich verringern kann, kann dies zu einer hohen Rauchentwicklung führen, wenn die Polymerharze Hitze oder Flammen ausgesetzt werden. Eine solche Rauschentwicklung ist zu vermeiden, da sie zu hohen Schäden und auch zu Vergiftungen mit Todesfolge führen kann.

Es ist daher Aufgabe der vorliegenden Erfindung, eine Flammschutzmittel-Stabilisator-Kombination sowie polymere Formmassen und Formkörper, die solche Flammschutzmittel-Stabilisator-Kombinationen enthalten, zur Verfügung zu stellen, die sowohl grundsätzlich keine oder eine sehr geringe Brennbarkeit als auch keine oder sehr geringe Rauchbildung zeigen, wenn die polymeren Formmassen und Formkörper etc. Hitze bzw. Flammen ausgesetzt sind.

Gelöst wird diese Aufgabe durch eine Flammschutzmittel- Stabilisator-Kombination enthaltend als Komponente A 20 bis 99 Gew.-% Phosphinsäuresalz der Formel (I) 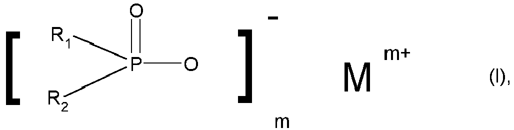 worin
- R₁ und R₂: jeweils Ethyl, M Al und
- m: 3 bedeutet;
als Komponente B 0,2 bis 16 Gew.-% Aluminium-Salze der Ethylbutylphosphinsäure, der Dibutylphosphinsäure, der Ethylhexylphosphinsäure, der Butylhexylphosphinsäure und/oder der Dihexylphosphinsäure;
als Komponente C 1 bis 80 Gew.-% eines Salzes der phosphorigen Säure mit der allgemeinen Formel (II)

[HP(=O)O₂]²⁻M ^{m+} (II)

worin
- M: Zn und
- m: 2 bedeutet;
als Komponente D 0 bis 80 Gew.-% eines Salzes der phosphorigen Säure mit der allgemeinen Formel (III)

[HP(=O)O₂]²⁻₃M^{m+}₂ (III)

worin
- M: Al und
- m: 3 bedeutet;
als Komponente E 0 bis 30 Gew.-% eines stickstoffhaltigen Synergisten und/oder eines Phosphor- und/oder Stickstoff-haltigen Flammschutzmittels;
als Komponente F 0 bis 10 Gew.-% eines anorganischen Synergisten, ausgewählt aus Zinkborat, Zinkstannat, Böhmit und/oder Hydrotalcit;
als Komponente G 0 bis 3 Gew.-% eines organischen Phosphonits und/oder einer Mischung aus einem organischen Phosphonit und einem organischen Phosphit und
als Komponente H 0 bis 3 Gew.-% eines Esters und/oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

Bevorzugt enthält die erfindungsgemäße Flammschutzmittel-Stabilisator-Kombination
20 bis 97,8 Gew.-% Komponente A,
0,2 bis 16 Gew.-% Komponente B,
1 bis 80 Gew.-% Komponente C und
1 bis 80 Gew.-% Komponente D,
wobei die Summe der Komponenten immer 100 Gew.-% beträgt.

Besonders bevorzugt enthält die erfindungsgemäße Flammschutzmittel-Stabilisator-Kombination
20 bis 97,6 Gew.-% Komponente A,
0,2 bis 16 Gew.-% Komponente B,
1 bis 50 Gew.-% Komponente C,
1 bis 50 Gew.-% Komponente D,
0 bis 30 Gew.-% Komponente E,
0 bis 10 Gew.-% Komponente F,
0,1 bis 2 Gew.-% Komponente G und
0,1 bis 2 Gew.-% Komponente H,
wobei die Summe der Komponenten immer 100 Gew.-% beträgt.

In einer besonderen Ausführungsform enthält die erfindungsgemäße Flammschutzmittel-Stabilisator-Kombination
20 bis 97,6 Gew.-% Komponente A,
0,2 bis 16 Gew.-% Komponente B,
1 bis 30 Gew.-% Komponente C,
0 bis 80 Gew.-% Komponente D,
1 bis 10 Gew.-% Komponente E,
0 bis 10 Gew.-% Komponente F,
0,1 bis 2 Gew.-% Komponente G und
0,1 bis 2 Gew.-% Komponente H,
wobei die Summe der Komponenten immer 100 Gew.-% beträgt.

In einer weiteren Ausführungsform enthält die erfindungsgemäße Flammschutzmittel-Stabilisator-Kombination
20 bis 96,6 Gew.-% Komponente A,
0,2 bis 16 Gew.-% Komponente B,
1 bis 50 Gew.-% Komponente C,
1 bis 50 Gew.-% Komponente D,
1 bis 10 Gew.-% Komponente E,
0 bis 10 Gew.-% Komponente F,
0,1 bis 2 Gew.-% Komponente G und
0,1 bis 2 Gew.-% Komponente H,
wobei die Summe der Komponenten immer 100 Gew.-% beträgt.

In einer noch anderen Ausführungsform enthält die erfindungsgemäße Flammschutzmittel-Stabilisator-Kombination
20 bis 96,6 Gew.-% Komponente A,
0,2 bis 16 Gew.-% Komponente B,
1 bis 50 Gew.-% Komponente C,
1 bis 50 Gew.-% Komponente D,
0 bis 10 Gew.-% Komponente E,
1 bis 10 Gew.-% Komponente F,
0,1 bis 2 Gew.-% Komponente G und
0,1 bis 2 Gew.-% Komponente H,
wobei die Summe der Komponenten immer 100 Gew.-% beträgt.

Bevorzugt handelt es sich bei der Komponente B um die Al-Salze der Ethylbutylphosphinsäure, der Dibutylphosphinsäure und/oder der Ethylhexylphosphinsäure.

Bevorzugt handelt es sich bei der Komponente C um Zinkphosphit, sekundäres Zinkphosphit (ZnHPO₃), Zn(H₂PO₃)₂, Zn_{2/3}HPO₃, Zinkphosphithydrate, Zinkpyrophosphit (ZnH₂P₂O₅), basisches Zinkphosphit der Formel

Zn₁₊ₓHPO₃(OH)₂ₓ

mit x=0 bis 0,25
und/oder um Natriumzinkphosphite der Formel

Zn₁₋ₓNa₂ₓHPO₄

mit x= 0,001 bis 0,5.

Bevorzugt handelt es sich bei der Komponente D um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)₃*xAl₂O₃*nH₂O mit x = 2,27 - 1 und/oder Al₄H₆P₁₆O₁₈ sowie um Aluminiumphosphite der Formeln (IV), (V) und/oder (VI)

Al₂(HPO₃)₃x (H₂O)_{q} (IV)

in der
- q: 0 bis 4 bedeutet,

Al_{2,00}M_{z}(HPO₃)_{y}(OH)ᵥ x (H₂O)_{w} (V)

in der
- M: Alkalimetallionen
- z: 0,01 bis 1,5
- y: 2,63 bis 3,5
- v: 0 bis 2 und
- w: 0 bis 4 bedeutet,

Al_{2,00}(HPO₃)ᵤ(H₂PO₃)ₜ x (H₂O)ₛ (VI)

in der
- u: 2 bis 2,99
- t: 2 bis 0,01 und
- s: 0 bis 4 bedeutet,
und/oder um Mischungen von Aluminiumphosphit der Formel (IV) mit schwerlöslichen Aluminiumsalzen und stickstofffreien Fremdionen, um Mischungen von Aluminiumphosphit der Formel (VI) mit Aluminiumsalzen, um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq],um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1 und/oder Al₄H₆P₁₆O₁₈.

Bevorzugt handelt es sich bei der Komponente E um Kondensationsprodukte des Melamins und/oder um Umsetzungsprodukte von Melamin mit Polyphosphorsäure und/oder um Umsetzungsprodukte von Kondensations-produkten des Melamins mit Polyphosphorsäure oder Gemische davon; und/oder um Melamincyanurat.

Besonders bevorzugt handelt es sich bei der Komponente E um Melem, Melam, Melon, Dimelaminpyrophosphat, Melaminpolyphosphat, Melempolyphosphat, Melampolyphosphat, Melonpolyphosphat und/oder gemischte Polysalze davon und/oder um stickstoffhaltige Phosphate der Formeln (NH₄)_{y}H_{3-y}PO₄ bzw. (NH₄PO₃)_{z} mit y gleich 1 bis 3 und z gleich 1 bis 10.000.

Die Erfindung betrifft auch die Verwendung einer Flammschutzmittel-Stabilisator-Kombination nach einem oder mehreren der Ansprüche 1 bis 11 als Flammschutzmittel, in oder als Flammschutzmittel für Klarlacke und Intumeszenzbeschichtungen, in oder als Flammschutzmittel für Holz und andere cellulosehaltige Produkte, in oder als reaktive und/oder nicht reaktive Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist und/oder als Synergist in weiteren Flammschutzmittel-Mischungen.

Die Erfindung betrifft ebenfalls flammgeschützte thermoplastische oder duroplastische Polymerformmassen, Polymer-Formkörper, -Filme, -Fäden und/oder -Fasern, enthaltend 2 bis 50 Gew.-% Flammschutzmittel-Stabilisator-Kombination nach einem oder mehreren der Ansprüche 1 bis 11, 50 bis 98 Gew.-% thermoplastisches oder duroplastisches Polymer oder Mischungen derselben, 0 bis 50 Gew.-% Additive und 0 bis 60 Gew.-% Füllstoff bzw. Verstärkungsmaterialien, wobei die Summe der Komponenten 100 Gew.-% beträgt.

Bevorzugt enthalten die flammgeschützten thermoplastischen oder duroplastischen Polymerformmassen, Polymer-Formkörper, -Filme, -Fäden und/oder -Fasern 7 bis 30 Gew.-% Flammschutzmittel-Stabilisator-Kombination nach einem oder mehreren der Ansprüche 1 bis 11, 30 bis 91 Gew.-% thermoplastisches oder duroplastisches Polymer oder Mischungen derselben, 1 bis 30 Gew.-% Additive und 1 bis 40 Gew.-% Füllstoff bzw. Verstärkungsmaterialien, wobei die Summe der Komponenten 100 Gew.-% beträgt.

Bevorzugt handelt es sich bei dem thermoplastischen Polymer um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe.

Bevorzugt handelt es sich bei den Additiven um Antioxidantien, UV-Absorber, Lichtschutzmittel, Metalldesaktivatoren, Peroxid-zerstörende Verbindungen, Polyamidstabilisatoren, basische Co-Stabilisatoren, Nukleierungsmittel, weitere Flammschutzmittel und/oder andere Zusätze.

Bevorzugt handelt es sich bei den Füllstoffen und Verstärkungsmitteln um Calciumcarbonat, Silikate, Glasfasern, Asbest, Talk, Kaolin, Glimmer, Bariumsulfat, Metalloxide und -hydroxide, Russ, Graphit und/oder andere geeignete Stoffe.

Die Erfindung betrifft schließlich auch die Verwendung der erfindungsgemäßen flammgeschützten thermoplastischen oder duroplastischen Polymerformmasse, Polymer-Formkörper, -Filme, -Fäden und/oder -Fasern in oder für Steckverbinder, stromberührten Teile in Stromverteilern (Fl-Schutz), Platinen, Vergussmassen, Stromstecker, Schutzschalter, Lampengehäuse, LED-Lampen- Gehäuse, Kondensatorgehäuse, Spulenkörper, Ventilatoren, Schutzkontakte, Steckern, in/auf Platinen, Gehäuse für Stecker, Kabel, flexible Leiterplatten, Ladekabel, Motorabdeckungen, Textilbeschichtungen und andere Produkte.

Zu den geeigneten Komponenten C gehören bevorzugt die folgenden Zinksalze der phosphorigen Säure (hier auch Zinkphosphite genannt) mit den CAS-Nummern 14332-59-3, 114332-59-3, 1431544-62-5, 14902-88-6, 52385-12-3 und 51728-08-6.

Vorzugsweise weisen die Zinkphosphite Teilchengrößen von 0,1 bis 100 µm und besonders bevorzugt von 0,1 bis 30 µm auf.

Bevorzugt geeignet als Komponente D sind Aluminiumphosphite mit den CAS-Nummern 15099-32-8, 119103-85-4, 220689-59-8, 56287-23-1, 156024-71-4, 71449-76-8 und 15099-32-8.

Bevorzugt geeignet als Komponente D sind auch Mischungen von Aluminiumphosphit und Aluminiumhydroxid der Zusammensetzung 5 - 95 Gew.-% Al₂(HPO₃)₃*nH₂O und 95 - 5 Gew.-% Al(OH)₃, besonders bevorzugt 10 - 90 Gew.-% Al₂(HPO₃)₃*nH₂O und 90 - 10 Gew.-% Al(OH)₃, ganz besonders bevorzugt 35 - 65 Gew.-% Al₂(HPO₃)₃*nH₂O und 65 - 35 Gew.-% Al(OH)₃ und jeweils n = 0 bis 4.

Bevorzugt weisen die vorgenannten Aluminiumphosphite Teilchengrößen von 0,2 bis 100 µm auf.

Bevorzugte Aluminiumsalze der Phosphorigen Säure (Komponente D) sind auch in Wasser unlösliche bzw. schwerlösliche Salze davon.

Als Komponente E werden bevorzugt Melaminpolyphosphat (als MPP bezeichnet) Melapur^{®} 200 (Fa. Ciba SC, CH), Melamincyanurat (als MC bezeichnet) Melapur^{®} MC50 (Fa. Ciba SC, CH), Melem, Delacal^{®} 420, Delacal^{®} 360 (Fa. Delamin Ltd, UK) und andere Produkte eingesetzt.

Bevorzugt handelt es sich bei der Komponente E auch um Ammoniumhydrogenphosphat, Ammoniumdihydrogenphosphat und/oder Ammoniumpolyphosphat.

Geeignete Komponenten E sind auch Verbindungen der Formeln (VII) bis (XII) oder Gemische davon 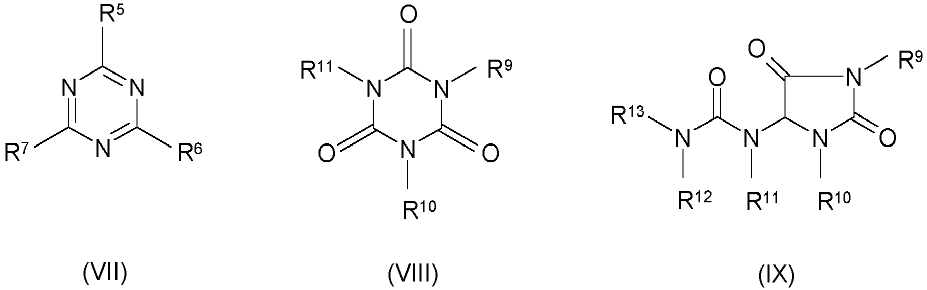 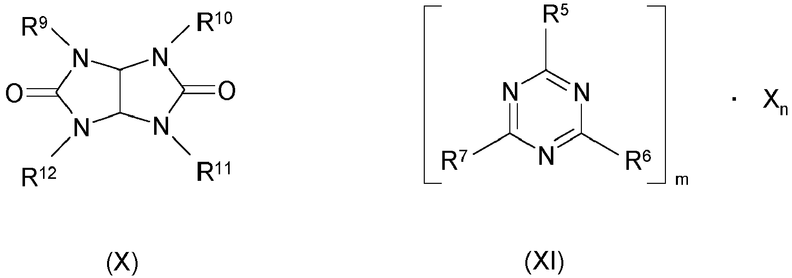 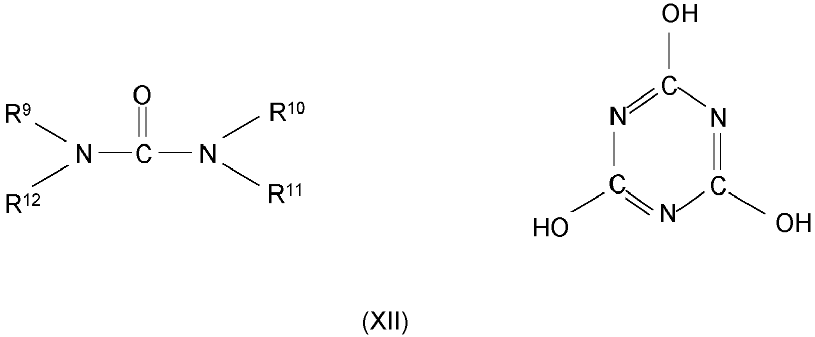 worin
R⁵ bis R⁷ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹, sowie N-alicyclisch oder N-aromatisch,
R⁸ Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
R⁹ bis R¹³ die gleichen Gruppen wie R⁸ sowie -O-R⁸,
m und n unabhängig voneinander 1, 2, 3 oder 4,
X Säuren, die Addukte mit Triazinverbindungen (VII) bilden können, bedeuten; oder um oligomere Ester des Tris(hydroxyethyl)isocyanurats mit aromatischen Polycarbonsäuren
Besonders geeignete Komponenten E sind Benzoguanamin, Tris(hydroxyethyl)isocyanurat, Allantoin, Glycouril, Melamin, Melamincyanurat, Dicyandiamid und/oder Guanidin.

Geeignet als Komponente G sind etwa Mischungen von Irgafos^{®} 168/Irganox^{®} 1098 1:1 für Polyamid 66 und Ultranox^{®} 626/Irganox^{®} 1076 1:1 für PBT.

Geeignet als Komponente H ist etwa Licomont^{®} CaV 102 der Clariant Produkte (Deutschland) GmbH (ein Ca-Salz der Montanwachssäure).

Geeignete Antioxidantien sind beispielsweise alkylierte Monophenole, z. B. 2,6-Di-tert-butyl-4-methylphenol; 1,2-Alkylthiomethylphenole, z. B. 2,4-Di-octylthiomethyl-6-tert-butylphenol; Hydrochinone und alkylierte Hydrochinone, z. B. 2,6-Di-tert-butyl-4-methoxyphenol; Tocopherole, z. B. α-Tocopherol, β-Tocopherol, γ-Tocopherol, δ-Tocopherol und Mischungen davon (Vitamin E); Hydroxylierte Thiodiphenylether, z. B. 2,2'-Thio-bis(6-tert-butyl-4-methylphenol), 2,2'-Thio-bis(4-octylphenol), 4,4'-Thio-bis-(6-tert-butyl-3-methylphenol), 4,4'-Thio-bis-(6-tert-butyl-2-methylphenol), 4,4'-Thio-bis-(3,6-di-sec.-amylphenol), 4,4'-Bis-(2,6-di-methyl-4-hydroxyphenyl)-disulfic; Alkyliden-Bisphenole, z. B. 2,2'-Methylen-bis-(6-tert-butyl-4-methylphenol; O-, N- und S-Benzylverbindungen, z. B. 3,5,3',5'-Tetra-tert-butyl-4,4'-dihydroxydibenzylether; hydroxybenzylierte Malonate, z. B. Dioctadecyl-2,2-bis-(3,5-di-tert-butyl-2-hydroxybenzyl)-malonat; Hydroxybenzyl-Aromaten, z. B. 1,3,5-Tris-(3,5-di-tert-buty)-4-hydroxybenzyl)-2,4,6-trimethylbenzo1, 1,4-Bis-(3,5-di-tert-butyl-4-hydroxybenzyl)-2,3,5,6-tetramethylbenzol 2,4,6-Tris-(3,5-di-tert-buryl-4-hydroxybenzyl)-phenol; Triazinverbindungen, z. B. 2,4-Bis-octylmercapto-6(3,5-di-tert-butyl-4-hydroxyanilino)-1,3,5-triazin; Benzylphosphonate, z. B. Dimethyl-2,5-di-tert-butyl-4-hydroxybenzylphosphonat; Acylaminophenole, 4-Hydroxylaurinsäureamid, 4-Hydroxystearinsäureanilid, N-(3,5-di-tert-butyl-4-hydroxyphenyl)-carbaminsäureoctylester; Ester der β-(3.5-Di-tert-butyl-4-hydroxyphenyl)-propionsäure mit ein- oder mehrwertigen Alkoholen; Ester der β-(5-tert-Butyl-4-hydroxy-3-methylphenyl)-propionsäure mit ein- oder mehrwertigen Alkoholen; Ester der β-(3,5-Dicyclohexyl-4-hydroxyphenyl)-propionsäure mit ein- oder mehrwertigen Alkoholen; Ester der 3,5-Di-tert-butyl-4-hydroxyphenylessigsäure mit ein- oder mehrwertigen Alkoholen; Amide der β-(3,5-Di-tert-butyl-4-hydroxyphenyl)-propionsäure, wie z. B. N,N'-Bis-(3,5-di-tert-butyl-4-hydroxyphenylpropionyl)-hexamethylendiamin, N,N'-Bis-(3,5-di-tert-butyl-4-hydroxyphenylpropionyl)-trimethylendiamin, N,N'-Bis-(3,5-di-tert-butyl-4-hydroxyphenylpropionyl)-hydrazin.

Geeignete UV-Absorber und Lichtschutzmittel sind beispielsweise 2-(2'-Hydroxyphenyl)-benzotriazole, wie z. B. 2-(2'-Hydroxy-5'-methylphenyl)-benzotriazol; 2-Hydroxybenzophenone, wie z. B. das 4-Hydroxy, 4-Methoxy, 4-Octoxy, 4-Decyloxy-, 4-Dodecyloxy-, 4-Benzyloxy-, 4,2',4-Trihydroxy-, 2'-Hydroxy-4,4'-dimethoxy-Derivat; Ester von gegebenenfalls substituierten Benzoesäuren, wie z. B. 4-tert-Butyl-phenylsalicylat, Phenylsalicylat, Octylphenylsalicylat, Dibenzoylresorcin, Bis-(4-tert-butylbenzoyl)-resorcin, Benzoylresorcin, 3,5-Di-tert-butyl-4-hydroxybenzoesäure-2,4-di-tert-butylphenylester, 3,5-Di-tert-butyl-4-hydroxybenzoesäurehexadecylester, 3,5-Di-tert-butyl-4-hydroxybenzoesäureoctadecylester, 3,5-Di-tert-butyl-4-hydroxybenzoesäure-2-methyl-4,6-di-tert-butylphenylester; Acrylate, wie z. B. α-Cyan-β,β-diphenylacrylsäureethylester bzw. -isooctylester, α-Carbomethoxyzimtsäuremethylester, α-Cyano-β-methyl-p-methoxyzimtsäuremethylester bzw. -butylester, α-Carbomethoxy-p-methoxyzimtsäuremethylester, N-(β-Carbo-methoxy-β-cyanovinyl)-2-methyl-indolin.

Geeignete Polyamidstabilisatoren sind z. B. Kupfersalze in Kombination mit Jodiden und/oder Phosphorverbindungen sowie Salze des zweiwertigen Mangans.

Geeignete basische Co-Stabilisatoren sind Melamin, Polyvinylpyrrolidon, Dicyandiamid, Triallylcyanurat, Harnstoff-Derivate, Hydrazin-Derivate, Amine, Polyamide, Polyurethane, Alkali- und Erdalkalisalze höherer Fettsäuren, beispielsweise Ca-Stearat, Zn-Stearat, Mg-Behenat, Mg-Stearat, Na-Ricinoleat, K-Palmitat, Antimonbrenzcatechinat oder Zinnbrenzcatechinat.

Geeignete Nukleierungsmittel sind z. B. 4-tert-Butylbenzoesäure, Adipinsäure und Diphenylessigsäure.

Zu den Füllstoffen und Verstärkungsmitteln gehören z. B. Calciumcarbonat, Silikate, Glasfasern, Asbest, Talk, Kaolin, Glimmer, Bariumsulfat, Metalloxide und -hydroxide, Russ, Graphit und andere.

Als weitere Flammschutzmittel sind z. B. Arylphosphate, organische Phosphonate, Salze der Hypophosphorigen Säure sowie roter Phosphor geeignet.

Zu den sonstigen Zusätzen zählt man z. B. Weichmacher, Blähgraphit, Gleitmittel, Emulgatoren, Pigmente, optische Aufheller, Flammschutzmittel, Antistatika, Treibmittel.

Besonders bevorzugt handelt es sich bei dem Kunststoff bzw. dem Polymer um Polyamide und/oder Polyester.

Besonders bevorzugt handelt es sich bei dem Kunststoff um Polyamide, Polyester und PPE/HIPS-Blends.

Die vorgenannten Additive können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Additive in die Polymerschmelze einzumischen. Weiterhin gibt es Verarbeitungsprozesse, bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Bevorzugt liegt die Flammschutzmittel-Stabilisator-Kombination als Granulat, Schuppen, Feinkorn, Pulver und/oder Micronisat vor.

Bevorzugt liegt die Flammschutzmittel-Stabilisator-Kombination als physikalische Mischung der Feststoffe, als Schmelzmischung, als Kompaktat, als Extrudat oder in Form eines Masterbatches vor.

Bevorzugt besitzt die Flammschutzmittel-Stabilisator-Kombination eine mittlere Teilchengröße von 0,1-200µm, besonders bevorzugt von 1-50µm.

Geeignete Polyester leiten sich von Dicarbonsäuren und deren Ester und Diolen und/oder von Hydroxycarbonsäuren oder den entsprechenden Lactonen ab. Besonders bevorzugt werden Terephthalsäure und Ethylenglykol, Propan-1,3-diol und Butan-1,3-diol eingesetzt.

Geeignete Polyester sind u.a. Polyethylenterephthalat, Polybutylenterephthalat (Celanex^{®} 2500, Celanex^{®} 2002, Fa Celanese; Ultradur^{®}, Fa. BASF), Poly-1,4-dimethylolcyclohexanterephthalat, Polyhydroxybenzoate sowie Block-Polyetherester, die sich von Polyethern mit Hydroxylendgruppen ableiten; ferner mit Polycarbonaten oder MBS modifizierte Polyester.

Die erfindungsgemäß hergestellten flammgeschützten Polyester-Formmassen werden bevorzugt in Polyester-Formkörpern eingesetzt.

Bevorzugte Polyester-Formkörper sind Fäden, Fasern, Folien und Formkörper, die als Dicarbonsäure-Komponente hauptsächlich Terephthalsäure und als Diolkomponente hauptsächlich Ethylenglykol enthalten.

Bevorzugt beträgt der resultierende Phosphorgehalt in aus flammgeschütztem Polyester hergestellten Fäden und Fasern 0,1 bis 18, bevorzugt 0,5 bis 15 und bei Folien 0,2 bis 15, bevorzugt 0,9 bis 12 Gew.-%.

Geeignete Polystyrole sind Polystyrol, Poly-(p-methylstyrol) und/oder Poly-(alpha-methylstyrol).

Bevorzugt handelt es sich bei den geeigneten Polystyrolen um Copolymere von Styrol oder alpha-Methylstyrol mit Dienen oder Acrylderivaten, wie z. B. Styrol-Butadien, Styrol-Acrylnitril, Styrol-Alkylmethacrylat, Styrol-Butadien-Alkylacrylat und -Methacrylat, Styrol-Maleinsäureanhydrid, Styrol-Acrylnitril-Methylacrylat; Mischungen von hoher Schlagzähigkeit aus Styrol-Copolymeren und einem anderen Polymer, wie z. B. einem Polyacrylat, einem Dien-Polymeren oder einem Ethylen-Propylen-Dien-Terpolymeren; sowie Block-Copolymere des Styrols, wie z. B. Styrol-Butadien-Styrol, Styrol-Isopren-Styrol, Styrol-Ethylen/Butylen-Styrol oder Styrol-Ethylen/Propylen-Styrol.

Bevorzugt handelt es sich bei den geeeigneten Polystyrolen auch um Pfropfcopolymere von Styrol oder alpha-Methylstyrol, wie z. B. Styrol auf Polybutadien, Styrol auf Polybutadien-Styrol- oder Polybutadien-Acrylnitril-Copolymere, Styrol und Acrylnitril (bzw. Methacrylnitril) auf Polybutadien; Styrol, Acrylnitril und Methylmethacrylat auf Polybutadien; Styrol und Maleinsäureanhydrid auf Polybutadien; Styrol, Acrylnitril und Maleinsäureanhydrid oder Maleinsäureimid auf Polybutadien; Styrol und Maleinsäureimid auf Polybutadien, Styrol und Alkylacrylate bzw. Alkylmethacrylate auf Polybutadien, Styrol und Acrylnitril auf Ethylen-Propylen-Dien-Terpolymeren, Styrol und Acrylnitril auf Polyalkylacrylaten oder Polyalkylmethacrylaten, Styrol und Acrylnitril auf Acrylat-Butadien-Copolymeren, sowie deren Mischungen, wie sie z. B. als so genannte ABS-, MBS-, ASA- oder AES-Polymere bekannt sind.

Bevorzugt handelt es sich bei den Polymeren um Polyamide und Copolyamide, die sich von Diaminen und Dicarbonsäuren und/oder von Aminocarbonsäuren oder den entsprechenden Lactamen ableiten, wie Polyamid 2,12, Polyamid 4, Polyamid 4,6, Polyamid 6, Polyamid 6,6, Polyamid 6,9, Polyamid 6,10, Polyamid 6,12, Polyamid 6,66, Polyamid 7,7, Polyamid 8,8, Polyamid 9,9, Polyamid 10,9, Polyamid 10,10, Polyamid 11, Polyamid 12, usw. Diese sind z. B unter den Handelsnamen Nylon^{®}, Fa. DuPont, Ultramid^{®}, Fa. BASF, Akulon^{®} K122, Fa. DSM, Zytel^{®} 7301, Fa. DuPont; Durethan^{®} B 29, Fa. Bayer und Grillamid^{®}, Fa. Ems Chemie bekannt.

Geeignet sind auch aromatische Polyamide ausgehend von m-Xylol, Diamin und Adipinsäure; Polyamide, hergestellt aus Hexamethylendiamin und Iso- und/oder Terephthalsäure und gegebenenfalls einem Elastomer als Modifikator, z. B. Poly-2,4,4-trimethylhexamethylen-terephthalamid oder Poly-m-phenylenisophthalamid, Blockcopolymere der vorstehend genannten Polyamide mit Polyolefinen, Olefin-Copolymeren, lonomeren oder chemisch gebundenen oder gepfropften Elastomeren, oder mit Polyethern, wie z. B. mit Polyethylenglykol, Polypropylenglykol oder Polytetramethylenglykol. Ferner mit EPDM oder ABS modifizierte Polyamide oder Copolyamide; sowie während der Verarbeitung kondensierte Polyamide ("RIM-Polyamidsysteme").

Die Erfindung betrifft schließlich auch ein Verfahren zur Herstellung von flammgeschützten Polymer-Formkörpern, dadurch gekennzeichnet, dass erfindungsgemäße flammgeschützte Polymer-Formmassen durch Spritzgießen (z. B. Spritzgießmaschine Typ Aarburg Allrounder) und Pressen, Schaumspritzgießen, Gasinnendruck-Spritzgießen, Blasformen, Foliengießen, Kalandern, Laminieren oder Beschichten bei höheren Temperaturen zum flammgeschützten Polymer-Formkörper verarbeitet wird.

Bevorzugt handelt es sich bei den Polymeren um thermoplastische Elastomere.

Thermoplastische Elastomere (Abkürzung: TPE) sind Werkstoffe, welche thermoplastisch verarbeitbar sind und gummiähnliche Gebrauchseigenschaften aufweisen.

Thermoplastische Elastomere lassen sich sehr leicht formen, da sie bei der Verarbeitung den plastischen Zustand durchlaufen. Sie lassen sich in allen Härten von 5 Shore A bis über 70 Shore D herstellen.

Thermoplastische Elastomere haben in Teilbereichen physikalische Vernetzungspunkte die sich bei Wärme auflösen, ohne dass sich die Makromoleküle zersetzen. Daher lassen sie sich wesentlich besser verarbeiten als normale Elastomere. So können auch Kunststoffabfälle wieder eingeschmolzen und weiterverarbeitet werden. Nach dem inneren Aufbau unterscheidet man Blockcopolymere und Elastomerlegierungen.

Blockcopolymere besitzen innerhalb eines Moleküls Hart- und Weichsegmente. Der Kunststoff besteht also aus einer Molekülsorte, in der beide Eigenschaften verteilt sind.
Elastomerlegierungen sind Polyblends, also Zusammenmischungen (Gemenge) von fertigen Polymeren, der Kunststoff besteht also aus mehreren Molekülsorten. Durch unterschiedliche Mischungsverhältnisse und Zuschlagmittel erhält man maßgeschneiderte Werkstoffe (beispielsweise Polyolefin-Elastomer aus Polypropylen (PP) und Naturgummi (NR) - je nach Mengenverhältnis decken sie einen weiten Härtebereich ab).

Man unterscheidet folgende Gruppen:
- TPE-O oder TPO = Thermoplastische Elastomere auf Olefinbasis, vorwiegend PP/EPDM, z. B. Santoprene^{®} (AES/Monsanto)
- TPE-V oder TPV = Vernetzte thermoplastische Elastomere auf Olefinbasis, vorwiegend PP/EPDM, z. B. Sarlink ^{®} (DSM)
- TPE-U oder TPU = Thermoplastische Elastomere auf Urethanbasis, z. B. Desmopan^{®} (Bayer)
- TPE-E oder TPC = Thermoplastische Copolyester, z. B. Hytrel^{®} (DuPont)
- TPE-S oder TPS = Styrol-Blockcopolymere (SBS, SEBS, SEPS, SEEPS und MBS), z. B. Septon^{®} (Kuraray) oder Thermolast^{®} (Kraiburg TPE)
- TPE-A oder TPA = Thermoplastische Copolyamide, z. B. PEBAX^{®} (Arkema)

Besonders bevorzugte thermoplastische Elastomere sind thermoplastische Copolyester, thermoplastische Copolyamide und thermoplastische Polyurethane.

Copolyetherester, die für die erfindungsgemäßen Zusammensetzungen geeignet sind, sind Polymere, die durch Umsetzen eines C₂-C₆-Diols mit einer aromatischen Disäureeinheit und einem Poly (alkylenoxid) diol hergestellt werden.

Besonders bevorzugte Copolyetherester sind ausgewählt aus:
1. Copolyetherester aus Butylendiol, Terephthalat und PTMEG;
2. Copolyetherester aus Butylendiol, Gemisch aus Terephthalat und Isophthalat und PTMEG;
3. Copolyetherester aus Butylendiol, Terephthalat und Poly (propylenoxid) diol;
4. Copolyetherester aus Propylendiol, Terephthalat und PTMEG; und
5. Copolyetherester aus Propylendiol, Terephthalat und Poly (propylenoxid) diol.

Besonders bevorzugt ist ein Copolyetherester aus Butylendiol, Terephthalat und PTMEG.

Bevorzugt wird die Flammschutzmittel-Stabilisator-Kombination in einer Formmasse eines Polyamides oder eines Polyesters verwendet. Geeignete Polyamide sind z. B. in der DE-A-19 920 276 beschrieben.

Bevorzugt handelt es sich bei den Polyamiden um solche vom Aminosäure-Typ und/oder vom Diamin-Dicarbonsäure-Typ.

Bevorzugte Polyamide sind Polyamid 6 und/oder Polyamid 66.

Bevorzugt sind die Polyamide unverändert, gefärbt, gefüllt, ungefüllt, verstärkt, unverstärkt oder auch anders modifiziert.

Bevorzugt handelt es sich bei den Polyestern um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

### Herstellung von Zinkphosphit

### Beispiel 1

8763,6 g Zinksulfatheptahydrat und 736,2 g VE-Wasser wurden vorgelegt, dann 5235,8 g Dinatriumphosphitlösung (39,3 %ig) innerhalb von 2 h zugegeben und danach 370 g VE-Wasser. Das so entstandene Zinkphosphit wurde 5 h bei 150°C kristallisiert. Anschließend wurde die Maische abgelassen, in einer Filternutsche dreimal mit der fünffachen Masse an VE-Wasser und der Filterkuchen bei 130°C im Trockenschrank getrocknet. Es ergeben sich 2096 g Produkt (97% Ausbeute). Das Röntgenpulverdiffraktogram zeigt Reflexe bei Winkeln von 18,2 Grd 2 Theta / 4,86 Ang (Angström) d-Wert, und 20,5 Grd /4,33 Ang,23,8 Grd /3,75 Ang,30,3 Grd /2,95 Ang,31,0 Grd /2,88 Ang,32,5 Grd /2,76 Ang,33,0 Grd /2,72 Ang.

### Beispiel 2

Wie in Beispiel 1 werden die gleichen Chemikalien dosiert. Das Zinkphosphit wurde 0,5 h bei 150°C kristallisiert und wie in Beispiel 1 gewaschen und getrocknet. Es ergeben sich 2090 g Produkt (97% Ausbeute). Das Röntgenpulverdiffraktogram zeigt die gleichen Reflexe wie in Beispiel 1.

### Beispiel 3

Wie in Beispiel 1 werden die gleichen Chemikalien dosiert. Das Zinkphosphit wurde 5 h bei 115°C kristallisiert und wie in Beispiel 1 gewaschen und getrocknet. Es ergeben sich 2098 g Produkt der Zusammensetzung Na₂Zn₃(HPO₃)₄ (97% Ausbeute).
Das Röntgenpulverdiffractogram zeigt Reflexe bei Winkeln von 10,0 Grd 2 Theta /8,82 Ang (Angström) d-Wert, und,0 Grd / 4,67 Ang, 20,15 Grd /4,41 Ang, 21,3 Grd /4,17 Ang, 22,8 Grd / 3,89 Ang, 27,8 Grd / 3,21 Ang, 28,1 Grd / 3,17 Ang.

### Beispiel 4

Wie in Beispiel 1 werden die gleichen Chemikalien dosiert. Das Zinkphosphit wurde 1 h bei 100°C kristallisiert und wie in Beispiel 1 gewaschen und getrocknet. Es ergeben sich 2095g Produkt der Zusammensetzung ZnHPO₃ ^{∗} 1,5H₂O (97% Ausbeute).

Das Röntgenpulverdiffractogram zeigt Reflexe bei Winkeln von 12,1 Grd 2 Theta /7,33 Ang (Angström) d-Wert, und 19,3 Grd / 4,60 Ang, 22,8 Grd / 3,89 Ang, 23,6 Grd / 3,77 Ang.

### Beispiele mit Polymeren

### 1. Eingesetzte Komponenten

Handelsübliche Polymere (Granulate):
Polyamid 6.6 (PA 6.6-GV): Ultramid^{®} A27 (Fa. BASF AG, D)
Polyamid 6T/66: Zytel^{®} HTN FE 8200 (Fa. DuPont, USA)
Polybutylenterephthalat (PBT): Ultradur^{®} B4500 (Fa. BASF AG, D)

Glasfasern PPG HP 3610 EC 10 4,5 mm (Fa. Nippon Electric Glas, NL)
Glasfasern PPG HP 3786 EC 10 4,5 mm (Fa. Nippon Electric Glas, NL)

### Flammschutzmittel (Komponente A):

Aluminium-diethylphosphinat, Aluminiumsalz der Diethylphosphinsäure hergestellt in Analogie zu Beispiel 1 der DE 196 07 635 A1.

### Flammschutzmittel (Komponente B1):

Aluminiumsalz der Diethylphosphinsäure enthaltend
1,7 mol-% an Aluminium-Ethylbutylphospinat (Beispiele B7, B11, B15, B16, B18, B20, B22, B23, B25, B27, B28, B29) bzw.
1,3 mol-% (B5, B13, B21, B26)
5,3 mol-% (B12)
7,3 mol-% (B6, B17)
0,7 mol-% (B8, B10, B14, B19, B24)
hergestellt nach dem Verfahren gemäß US 7,420,007 B2

### Flammschutzmittel (Komponente B2):

Aluminiumsalz der Diethylphosphinsäure enthaltend
0,7 mol-% an Aluminium-dibutylphosphinat (B9)
1,7 mol-% an Aluminium-dibutylphosphinat (B22)
hergestellt nach dem Verfahren gemäß US 7,420,007 B2

### Flammschutzmittel (Komponente B3):

Aluminiumsalz der Diethylphosphinsäure enthaltend
1,7 mol-% an Aluminium-ethylhexylphosphinat (B23)
hergestellt nach dem Verfahren gemäß US 7,420,007 B2

### Flammschutzmittel (Komponente C):

Zinksalz der Phosphorigen Säure, im Folgenden als PHOPZN bezeichnet

### Flammschutzmittel (Komponente D):

Aluminiumsalz der Phosphorigen Säure, im Folgenden als PHOPAL bezeichnet

### Synergist (Komponente E):

Melaminpolyphosphat (als MPP bezeichnet) Melapur^{®} 200 (Fa. Ciba SC, CH)
Melamincyanurat (als MC bezeichnet) Melapur^{®} MC50 (Fa. Ciba SC, CH)
Melem, Delacal^{®} 420, Delacal^{®} 360 (Fa. Delamin Ltd, UK)

### Komponente F:

Zinkborat Firebrake^{®} ZB und Firebrake^{®} 500, Fa. Borax, USA
Böhmit: Apyral AOH 180, Fa. Nabaltec, D

### Stabilisatoren (Komponente G):

Irgafos 168/Irganox 1098 1:1 für Polyamid 66, Ultranox 626/Irgnox 1076 1:1 für PBT; PEP-Q

### Wachskomponenten (Komponente H):

Licomont^{®} CaV 102, Clariant Produkte (Deutschland) GmbH, D (Ca-Salz der Montanwachssäure)
Licowax^{®} E, Fa. Clariant Produkte (Deutschland) GmbH, D (Ester der Montanwachssäure)

### 2. Herstellung, Verarbeitung und Prüfung von flammhemmenden Kunststoff-Formmassen

Die Flammschutzmittelkomponenten wurden in dem in der Tabelle angegebenen Verhältnis mit dem Phosphonit, den Gleitmitteln und Stabilisatoren vermischt und über den Seiteneinzug eines Doppelschnecken-Extruders (Typ Leistritz ZSE 27/44D) bei Temperaturen von 260 bis 310°C in PA 6.6 bzw. bei 250 - 275°C in PBT eingearbeitet. Die Glasfasern wurden über einen zweiten Seiteneinzug zugegeben. Der homogenisierte Polymerstrang wurde abgezogen, im Wasserbad gekühlt und anschließend granuliert.

Nach ausreichender Trocknung wurden die Formmassen auf einer Spritzgießmaschine (Typ Arburg 320 C Allrounder) bei Massetemperaturen von 250 bis 300°C zu Prüfkörpern verarbeitet und anhand des UL 94-Tests (Underwriter Laboratories) auf Flammwidrigkeit geprüft und klassifiziert.

Nach UL 94 ergeben sich folgende Brandklassen:
- V-0: kein Nachbrennen länger als 10 sec, Summe der Nachbrennzeiten bei 10 Beflammungen nicht größer als 50 sec, kein brennendes Abtropfen, kein vollständiges Abbrennen der Probe, kein Nachglühen der Proben länger als 30 sec nach Beflammungsende.
- V-1: kein Nachbrennen länger als 30 sec nach Beflammungsende, Summe der Nachbrennzeiten bei 10 Beflammungen nicht größer als 250 sec, kein Nachglühen der Proben länger als 60 sec nach Beflammungsende, übrige Kriterien wie bei V-0.
- V-2: Zündung der Watte durch brennendes Abtropfen, übrige Kriterien wie bei V-1.

Nicht klassifizierbar (nkl) erfüllt nicht die Brandklasse V-2.

### D Smoke Density

Die optische Rauchgasdichte wurde bestimmt nach ISO 5659 Standard in einer "NBS smoke chamber" von Fire Testing Technologies, UK . Per Spritzguss hergestellte Probekörper mit den Abmessungen von 75 mm x 75 mm und einer Dicke von 2 mm. Die Probekörper werden horizontal eingespannt und mit 25 kw/m² bestrahlt in Anwesenheit einer Pilotflamme für 40 min. Die Abschwächung eines Lichtstrahls durch den Rauch wird mit einem Photodetektor gemessen. Die Rauchgasdichte ist umgekehrt proportional der Lichtabschwächung.

Die Fließfähigkeit der Formmassen wurde durch Ermittlung des Schmelzvolumenindex (MVR) bei 275°C/2,16 kg bestimmt. Ein starker Anstieg des MVR-Wertes deutet auf einen Polymerabbau hin.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Bei den Mengenangaben in den nachfolgenden Tabellen handelt es sich um Gewichtsteile.

Die Tabelle 1 zeigt, wie durch Zugabe von Zink- und Aluminiumphosphit die Rauchgasdichte von Polyamid 66 mit Aluminium-diethylphosphinat, Aluminium-butylethylphosphinat und Aluminium-dibutylphosphinat geringer wird. PHOPZN bewirkt eine geringere Rauchgasdichte. Nur durch die Verwendung von Aluminium-diethylphosphinat, Aluminium-butylethylphosphinat und Aluminium-dibutylphosphinat, PHOPZN und PHOPAL zusammen wird die Brandklasse UL 94 V-0 zusammen mit einer geringen Rauchgasdichte erreicht.

**Tabelle 1: PA 66 GF 30 Versuchsergebnisse. V1-V2 sind Vergleichsbeispiele, B5 bis B11 erfindungsgemäße Flammschutz-Stabilisator-Mischungen**

| | V1 | V2 | B5 | B6 | B7 | B8 | B9 | B10 | B11 |
|---|---|---|---|---|---|---|---|---|---|
| Polyamid 66 | 50 | 50 | 50 | 50 | 50 | 50 | 50 | 50 | 50 |
| Glasfasern 3610 | 30 | 30 | 30 | 30 | 30 | 30 | 30 | 30 | 30 |
| A: Aluminium-diethylphosphinat | 20 | 17,5 | 17,27 | 15,15 | 15,98 | 16,15 | 14,9 | 14,9 | 12,29 |
| B1: Aluminium-butylethylphosphinat | | | 0,23 | 1,1 | 0,27 | 0,11 | | 0,1 | 0,21 |
| B2: Aluminium-dibutylphosphinat | | | | | | | 0,1 | | |
| C: PHOPZN | | | 2,5 | 2,5 | 2,5 | 2,5 | 2,5 | 2,5 | 5 |
| D: PHOPAL | | 2,5 | | 1,25 | 1,25 | 1,25 | 2,5 | 2,5 | 2,5 |
| UL 94 0,8 mm | V-1 | V-0 | V-1 | V-0 | V-0 | V-0 | V-0 | V-0 | V-0 |
| Opt. Rauchgasdichte | hoch | hoch | mittel | gering | gering | gering | gering | gering | gering |

In Tabelle 2 sind Vergleichsbeispiele V4 bis V5 dargestellt, in denen eine Flammschutzmittel-Stabilisator-Kombination, basierend auf Aluminium-diethylphosphinat und Aluminium-butylethylphosphinat, MPP, PHOPZN oder PHOPAL verwendet wurden.

Die Ergebnisse, in denen die Flammschutzmittel-Stabilisator-Mischung gemäß der Erfindung eingesetzt wurden, sind in den Beispielen B12 bis B15 aufgelistet. Alle Mengen sind als Gew.-% angegeben und beziehen sich auf die Kunststoff-Formmasse einschließlich der Flammschutzmittel-Stabilisator-Kombination und Zusatzstoffen.

**Tabelle 2: PA 66 GF 30 Versuchsergebnisse. V2 bis V4 sind Vergleichsbeispiele, B12 bis B15 erfindungsgemäße Flammschutz-Stabilisator-Mischung**

| | V2 | V4 | B12 | B13 | B14 | B15 |
|---|---|---|---|---|---|---|
| Polyamid 66 | 49,55 | 49,55 | 49,55 | 49,55 | 49,55 | 49,55 |
| Glasfasern 3610 | 30 | 30 | 30 | 30 | 30 | 30 |
| A: Aluminium-diethylphosphinat | 13 | 15 | 15 | 14,81 | 13,4 | 14,75 |
| B1: Aluminium-butylethylphosphinat | | | 0,75 | 0,19 | 0,1 | 0,25 |
| C: PHOPZN | | | 2 | 2,5 | 2,5 | 1 |
| D: PHOPAL | | 2 | | 2,5 | 2 | 3 |
| E: MPP | 7 | 3 | 3 | | 2 | 1 |
| H: Licowax E | 0,25 | 0,25 | 0,25 | 0,25 | 0,25 | 0,25 |
| G: 168/1098 1:1 | 0,20 | 0,20 | 0,20 | 0,20 | 0,20 | 0,20 |
| UL 94 0,8 mm | V-0 | V-0 | V-1 | V-0 | V-0 | V-0 |
| MVR 275°C/2,16 kg | 19 | 13 | 12 | 5 | 9 | 7 |
| Opt. Rauchgasdichte | hoch | hoch | mittel | gering | gering | gering |

Aus den Beispielen B12-15 geht hervor, dass mit der erfindungsgemäßen Mischung aus den Komponenten Aluminium-diethylphosphinat und Aluminium-butylethylphosphinat, PHOPZN, PHOPAL und ggf. MPP die Brandklasse UL 94 V-0, geringer MVR (wenig Polymerabbau) und geringe optische Rauchgasdichte gemessen wird.

**Tabelle 3: PBT GF 25 Versuchsergebnisse. V5-V6 sind Vergleichsbeispiele, B16-B25 erfindungsgemäße Flammschutz-Stabilisator-Mischung**

| | V5 | V6 | B16 | B17 | B18 | B19 | B20 | B21 | B22 | B23 | B24 | B25 |
|---|---|---|---|---|---|---|---|---|---|---|---|---|
| PBT | 54,55 | 54,55 | 54,55 | 54,55 | 54,55 | 54,55 | 54,55 | 54,55 | 54,55 | 54,55 | 54,55 | 54,55 |
| Glasfasern 3786 | 25 | 25 | 25 | 25 | 25 | 25 | 25 | 25 | 25 | 25 | 25 | 25 |
| A: Aluminium-diethylphosphinat | 13 | 12 | 11,8 | 13,98 | 11,8 | 11,92 | 18,69 | 15,2 | 11,8 | 11,8 | 15,3 | 9,83 |
| B1: Aluminium-butylethylphosphinat | | | 0,2 | 1,02 | 0,2 | 0,08 | 0,31 | 0,2 | | | 0,1 | 0,17 |
| B2: Aluminium-dibutylphosphinat | | | | | | | | | 0,2 | | | |
| B3: Aluminiumhexylethyl-phosphinat | | | | | | | | | | 0,2 | | |
| C: PHOPZN | | | 5 | 2,5 | 2 | 2 | 0,5 | 0,3 | 2 | 2 | 0,3 | 9 |
| D: PHOPAL | | 5 | | 2,5 | 2 | 2 | 0,5 | 0,3 | 2 | 2 | 0,3 | |
| E1: MC | 7 | 3 | 3 | | | 4 | | | | | 4 | 1 |
| E2: MPP | | | | | 4 | | | 4 | 4 | 4 | | |
| H: Licowax E | 0,25 | 0,25 | 0,25 | 0,25 | 0,25 | 0,25 | 0,25 | 0,25 | 0,25 | 0,25 | 0,25 | 0,25 |
| G: P-EPQ | 0,2 | 0,2 | 0,2 | 0,2 | 0,2 | 0,2 | 0,2 | 0,2 | 0,2 | 0,2 | 0,2 | 0,2 |
| UL 94 0,8 mm | V-1 | V-0 | V-0 | V-0 | V-0 | V-0 | V-0 | V-0 | V-0 | V-0 | V-0 | V-1 |
| Löseviskosität SV* | 1185 | 1235 | 1279 | 1375 | 1350 | 1238 | 1320 | 1290 | 1255 | 1370 | 1335 | 1235 |
| Opt. Rauchgasdichte | hoch | hoch | mittel | gering | gering | gering | mittel | mittel | gering | gering | mittel | gering |

| | | | | | | | | | | | | |
|---|---|---|---|---|---|---|---|---|---|---|---|---|
| * in Dichloressigsäure, reines PBT (uncompoundiert) hat 1450 | | | | | | | | | | | | |

Die Einarbeitung von Aluminium-diethylphosphinat und MC ergibt hohe Rauchgasdichte und nur eine UL 94 V-1 Brandklasse. Die Kombination von Aluminium-diethylphosphinat, PHOPAL und MC führt zu UL 94 V-0 und hoher Rauchgasdichte. Erst durch die erfindungsgemäße Einarbeitung von Aluminium-diethylphosphinat, Aluminium-butylethylphosphinat, Aluminium-dibutylphosphinat, Aluminium-ethylhexylphosphinat, PHOPZN bzw PHOPAL und PHOPZN sowie MC oder MPP werden eine V-1 / V-0 Brandklasse und verringerte Rauchgasdichte erreicht.

Durch die erfindungsgemäße Kombination von Aluminium-diethylphosphinat, Aluminium-butylethylphosphinat, Aluminium-dibutylphosphinat, Aluminium-ethylhexylphosphinat mit PHOPZN und PHOPAL und ggf. den weiteren Additiven wird zudem der Polymerabbau, erkennbar an geringer SV Zahl, nahezu vollständig unterdrückt.

**Tabelle 4: PA6T/66 GF 30 Versuchsergebnisse. V7-V8 sind Vergleichsbeispiele, B26-B29 erfindungsgemäße Flammschutz-Stabilisator-Mischung**

| | V7 | V8 | B26 | B27 | B28 | B29 |
|---|---|---|---|---|---|---|
| Polyamid 6T/66 | 54,55 | 54,55 | 54,55 | 54,55 | 54,55 | 54,55 |
| Glasfasern 3610 | 30 | 30 | 30 | 30 | 30 | 30 |
| A: Aluminium-diethylphosphinat | 15 | 13 | 13 | 12 | 12 | 12 |
| B1: Aluminium-butylethylphosphinat | | | 0,2 | 0,2 | 0,2 | 0,2 |
| C: PHOPZN | | | 2 | 2,5 | 1,5 | 1 |
| D: PHOPAL | | 2 | | 2,5 | 1,5 | 1 |
| F: Böhmit | | | | | 2 | 3 |
| H: CaV 102 | 0,25 | 0,25 | 0,25 | 0,25 | 0,25 | 0,25 |
| G: P-EPQ | 0,20 | 0,20 | 0,20 | 0,20 | 0,20 | 0,20 |
| UL 94 0,8 mm | V-0 | V-1 | V-1 | V-0 | V-0 | V-0 |
| Opt. Rauchgasdichte | hoch | hoch | mittel | gering | gering | gering |

Die Tabelle 4 zeigt das mit der erfindungsgemäßen Kombination von Aluminium-diethylphosphinat, Aluminium-butylethylphosphinat, PHOPZN und PHOPAL eine V-1/ V-0 Einstufung mit verringerter Rauchgasdichte erhalten wird als ohne PHOPZN bzw die Kombination von PHOPZN und PHOPAL.

## Patentansprüche

1. Flammschutzmittel-Stabilisator-Kombination für thermoplastische Polymere, enthaltend als Komponente A 20 bis 99,7 Gew.-% Phosphinsäuresalz der Formel (I) als Komponente A 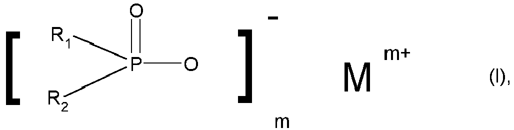 worin
R₁ und R₂ jeweils Ethyl, M Al und
m 3 bedeutet;
als Komponente B 0,2 bis 16 Gew.-% Aluminium-Salze der Ethylbutylphosphinsäure, der Dibutylphosphinsäure, der Ethylhexylphosphinsäure, der Butylhexylphosphinsäure und/oder der Dihexylphosphinsäure;
als Komponente C 0,1 bis 80 Gew.-% eines Salzes der phosphorigen Säure mit der allgemeinen Formel (II)
[HP(=O)O₂]²⁻M^{m+} (II)
worin
M Zn und
m 2 bedeutet;
als Komponente D 0 bis 80 Gew.-% eines Salzes der phosphorigen Säure mit der allgemeinen Formel (III)
[HP(=O)O₂]²⁻₃M^{m+}₂ (III)
worin
M Al und
m 3 bedeutet;
als Komponente E 0 bis 30 Gew.-% eines stickstoffhaltigen Synergisten und/oder eines Phosphor- und/oder Stickstoff-haltigen Flammschutzmittels;
als Komponente F 0 bis 10 Gew.-% eines anorganischen Synergisten, ausgewählt aus Zinkborat, Zinkstannat, Böhmit und/oder Hydrotalcit;
als Komponente G 0 bis 3 Gew. % eines organisches Phosphonits und/oder einer Mischung aus einem organischem Phosphonit und einem organischen Phosphit und
als Komponente H 0 bis 3 Gew.-% eines Esters und/oder Salzes von langkettigen aliphatischen Carbonsäuren (Fettsäuren), die typischerweise Kettenlängen von C₁₄ bis C₄₀ aufweisen, wobei die Summe der Komponenten immer 100 Gew.-% beträgt.

2. Flammschutzmittel-Stabilisator-Kombination nach Anspruch 1, **dadurch gekennzeichnet, dass** sie
20 bis 97,8 Gew.-% Komponente A,
0,2 bis 16 Gew.-% Komponente B,
1 bis 80 Gew.-% Komponente C und
1 bis 80 Gew.-% Komponente D enthält, wobei die Summe der Komponenten immer 100 Gew.-% beträgt.

3. Flammschutzmittel-Stabilisator-Kombination nach Anspruch 1 oder 2, **dadurch gekennzeichnet, dass** sie
20 bis 97,6 Gew.-% Komponente A,
0,2 bis 16 Gew.-% Komponente B,
1 bis 50 Gew.-% Komponente C,
1 bis 50 Gew.-% Komponente D,
0 bis 30 Gew.-% Komponente E,
0 bis 10 Gew.-% Komponente F,
0,1 bis 2 Gew.-% Komponente G und
0,1 bis 2 Gew.-% Komponente H enthält, wobei die Summe der Komponenten immer 100 Gew.-% beträgt.

4. Flammschutzmittel-Stabilisator-Kombination nach einem oder mehreren der Ansprüche 1 bis 3, **dadurch gekennzeichnet, dass** sie
20 bis 97,6 Gew.-% Komponente A,
0,2 bis 16 Gew.-% Komponente B,
1 bis 30 Gew.-% Komponente C,
0 bis 80 Gew.-% Komponente D,
1 bis 10 Gew.-% Komponente E,
0 bis 10 Gew.-% Komponente F,
0,1 bis 2 Gew.-% Komponente G und
0,1 bis 2 Gew.-% Komponente H enthält, wobei die Summe der Komponenten immer 100 Gew.-% beträgt.

5. Flammschutzmittel-Stabilisator-Kombination nach einem oder mehreren der Ansprüche 1 bis 3, **dadurch gekennzeichnet, dass** sie
20 bis 96,6 Gew.-% Komponente A,
0,2 bis 16 Gew.-% Komponente B,
1 bis 50 Gew.-% Komponente C,
1 bis 50 Gew.-% Komponente D,
1 bis 10 Gew.-% Komponente E,
0 bis 10 Gew.-% Komponente F,
0,1 bis 2 Gew.-% Komponente G und
0,1 bis 2 Gew.-% Komponente H enthält, wobei die Summe der Komponenten immer 100 Gew.-% beträgt.

6. Flammschutzmittel-Stabilisator-Kombination nach einem oder mehreren der Ansprüche 1 bis 3, **dadurch gekennzeichnet, dass** sie
20 bis 96,6 Gew.-% Komponente A,
0,2 bis 16 Gew.-% Komponente B,
1 bis 50 Gew.-% Komponente C,
1 bis 50 Gew.-% Komponente D,
0 bis 10 Gew.-% Komponente E,
1 bis 10 Gew.-% Komponente F,
0,1 bis 2 Gew.-% Komponente G und
0,1 bis 2 Gew.-% Komponente H enthält, wobei die Summe der Komponenten immer 100 Gew.-% beträgt.

7. Flammschutzmittel-Stabilisator-Kombination nach einem oder mehreren der Ansprüche 1 bis 6, **dadurch gekennzeichnet, dass** es sich bei der Komponente B um die Al-Salze der Ethylbutylphosphinsäure, der Dibutylphosphinsäure und/oder der Ethylhexylphosphinsäure handelt.

8. Flammschutzmittel-Stabilisator-Kombination nach einem oder mehreren der Ansprüche 1 bis 7, **dadurch gekennzeichnet, dass** es sich bei der Komponente C um Zinkphosphit, sekundäres Zinkphosphit (ZnHPO₃), Zn(H₂PO₃)₂, Zn_{2/3}HPO₃, Zinkphosphithydrate, Zinkpyrophosphit (ZnH₂P₂O₅), basisches Zinkphosphit der Formel
Zn₁₊ₓHPO₃(OH)₂ₓ
mit x = 0 bis 0,25 und/oder um Natriumzinkphosphite der Formel
Zn₁₋ₓNa₂ₓHPO₄
mit x = 0,001 bis 0,5, handelt.

9. Flammschutzmittel-Stabilisator-Kombination nach einem oder mehreren der Ansprüche 1 bis 8, **dadurch gekennzeichnet, dass** es sich bei der Komponente D um Aluminiumphosphit [Al(H₂PO₃)₃], sekundäres Aluminiumphosphit [Al₂(HPO₃)₃], basisches Aluminiumphosphit [Al(OH)(H₂PO₃)₂*2aq], Aluminiumphosphittetrahydrat [Al₂(HPO₃)₃*4aq], Aluminiumphosphonat, Al₇(HPO₃)₉(OH)₆(1,6-Hexandiamin)_{1,5}*12H₂O, Al₂(HPO₃)₃*xAl₂O₃*nH₂O mit x = 2,27 - 1 und/oder Al₄H₆P₁₆O₁₈ sowie um Aluminiumphosphite der Formeln (IV), (V) und/oder (VI)
Al₂(HPO₃)₃x(H₂O)_{q} (IV)
in der
q 0 bis 4 bedeutet,
Al_{2,00}M_{z}(HPO₃)_{y}(OH)ᵥ x (H₂O)_{w} (V)
in der
M Alkalimetallionen
z 0,01 bis 1,5
y 2,63 bis 3,5
v 0 bis 2 und
w 0 bis 4
bedeutet,
Al_{2,00}(HPO₃)ᵤ(H₂PO₃)ₜ x (H₂O)ₛ (VI)
in der
u 2 bis 2,99
t 2 bis 0,01 und
s 0 bis 4
bedeutet, und/oder um Mischungen von Aluminiumphosphit der Formel (IV) mit schwerlöslichen Aluminiumsalzen und stickstofffreien Fremdionen, um Mischungen von Aluminiumphosphit der Formel (VI) mit Aluminiumsalzen, um Aluminiumphosphit [Al(H2PO₃)₃], um sekundäres Aluminiumphosphit [Al₂(HPO₃)₃], um basisches Aluminiumphosphit [Al(OH)(H₂PO₃)₂*2aq], um Aluminiumphosphittetrahydrat [Al₂(HPO₃)₃*4aq],um Aluminiumphosphonat, um Al₇(HPO₃)₉(OH)₆(1,6-Hexandiamin)_{1,5}*12H₂O, um Al₂(HPO₃)³*xAl₂O₃*nH₂O mit x = 2,27 - 1 und/oder Al₄H₆P₁₆O₁₈.

10. Flammschutzmittel-Stabilisator-Kombination nach einem oder mehreren der Ansprüche 1 bis 9, **dadurch gekennzeichnet, dass** es sich bei der Komponente E um Kondensationsprodukte des Melamins und/oder um Umsetzungsprodukte von Melamin mit Polyphosphorsäure und/oder um Umsetzungsprodukte von Kondensations-produkten des Melamins mit Polyphosphorsäure oder Gemische davon; und/oder um Melamincyanurat handelt.

11. Flammschutzmittel-Stabilisator-Kombination nach Anspuch 10, **dadurch gekennzeichnet, dass** es sich bei der Komponente E um Melem, Melam, Melon, Dimelaminpyrophosphat, Melaminpolyphosphat, Melempolyphosphat, Melampolyphosphat, Melonpolyphosphat und/oder gemischte Polysalze davon und/oder um stickstoffhaltige Phosphate der Formeln (NH₄)_{y}H_{3-y}PO₄ bzw. (NH₄PO₃)_{z} mit y gleich 1 bis 3 und z gleich 1 bis 10.000, handelt.

12. Verwendung einer Flammschutzmittel-Stabilisator-Kombination nach einem oder mehreren der Ansprüche 1 bis 11 als Flammschutzmittel, in oder als Flammschutzmittel für Klarlacke und Intumeszenzbeschichtungen, in oder als Flammschutzmittel für Holz und andere cellulosehaltige Produkte, in oder als reaktive und/oder nicht reaktive Flammschutzmittel für Polymere, zur Herstellung von flammgeschützten Polymerformmassen, zur Herstellung von flammgeschützten Polymerformkörpern und/oder zum flammhemmend Ausrüsten von Polyester und Cellulose-Rein- und Mischgeweben durch Imprägnierung und/oder als Synergist und/oder als Synergist in weiteren Flammschutzmittel-Mischungen.

13. Flammgeschützte thermoplastische oder duroplastische Polymerformmasse, Polymer-Formkörper, -Filme, -Fäden und/oder -Fasern, enthaltend 2 bis 50 Gew.-% Flammschutzmittel-Stabilisator-Kombination nach einem oder mehreren der Ansprüche 1 bis 11, 50 bis 98 Gew.-% thermoplastisches oder duroplastisches Polymer oder Mischungen derselben, 0 bis 50 Gew.-% Additive und 0 bis 60 Gew.-% Füllstoff bzw. Verstärkungsmaterialien, wobei die Summe der Komponenten 100 Gew.-% beträgt.

14. Flammgeschützte thermoplastische oder duroplastische Polymerformmasse, Polymer-Formkörper, -Filme, -Fäden und/oder -Fasern, enthaltend 7 bis 30 Gew.-% Flammschutzmittel-Stabilisator-Kombination nach einem oder mehreren der Ansprüche 1 bis 11, 30 bis 91 Gew.-% thermoplastisches oder duroplastisches Polymer oder Mischungen derselben, 1 bis 30 Gew.-% Additive und 1 bis 40 Gew.-% Füllstoff bzw. Verstärkungsmaterialien, wobei die Summe der Komponenten 100 Gew.-% beträgt.

15. Flammgeschützte thermoplastische oder duroplastische Polymerformmasse, Polymer-Formkörper, -Filme, -Fäden und/oder -Fasern, enthaltend Flammschutzmittel-Mischungen nach einem oder mehreren der Ansprüche 1 bis 11, **dadurch gekennzeichnet, dass** es sich bei dem Kunststoff um thermoplastische Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Poly-styrol-HI) Kunststoffe handelt.

16. Flammgeschützte thermoplastische oder duroplastische Polymerformmasse, Polymer-Formkörper, -Filme, -Fäden und/oder -Fasern nach einem oder mehreren der Ansprüche 13 bis 15, **dadurch gekennzeichnet, dass** es sich bei den Additiven um Antioxidantien, UV-Absorber, Lichtschutzmittel, Metalldesaktivatoren, Peroxid-zerstörende Verbindungen, Polyamidstabilisatoren, basische Co-Stabilisatoren, Nukleierungsmittel, weitere Flammschutzmittel und/oder andere Zusätze handelt.

17. Flammgeschützte thermoplastische oder duroplastische Polymerformmasse, Polymer-Formkörper, -Filme, -Fäden und/oder -Fasern nach einem oder mehreren der Ansprüche 13 bis 16, **dadurch gekennzeichnet, dass** es sich bei den Füllstoffen und Verstärkungsmitteln um Calciumcarbonat, Silikate, Glasfasern, Asbest, Talk, Kaolin, Glimmer, Bariumsulfat, Metalloxide und -hydroxide, Russ, Graphit und/oder andere geeignete Stoffe handelt.

18. Verwendung der flammgeschützten thermoplastischen oder duroplastischen Polymerformmasse, Polymer-Formkörper, -Filme, -Fäden und/oder -Fasern nach einem oder mehreren der Ansprüche 13 bis 17 in oder für Steckverbinder, stromberührten Teile in Stromverteilern (FI-Schutz), Platinen, Vergußmassen, Stromstecker, Schutzschalter, Lampengehäuse, LED-LampenGehäuse, Kondensatorgehäuse, Spulenkörper, Ventilatoren, Schutzkontakte, Steckern, in/auf Platinen, Gehäuse für Stecker, Kabel, flexible Leiterplatten, Ladekabel, Motorabdeckungen, Textilbeschichtungen und andere Produkte.
